# EUROPÄISCHE PATENTSCHRIFT

(11) **EP 0 641 977 B1**
(45) Veröffentlichungstag und Bekanntmachung des Hinweises auf die Patenterteilung: **01.04.1998**
(21) Anmeldenummer: 94113182.3
(22) Anmeldetag: 24.08.1994
(51) Int. Cl.: F24F 7/00, F24F 7/10

(54) **Reinraumanlage**
Clean room arrangement
Aménagement de salle blanche

(30) Priorität: 28.08.1993 DE 4328995
(43) Veröffentlichungstag der Anmeldung: 08.03.1995
(73) Patentinhaber: Meissner & Wurst GmbH & Co. Lufttechnische Anlagen Gebäude- und Verfahrenstechnik, D-70499 Stuttgart (DE)
(72) Erfinder: Renz, Manfred, Dr.-Ing., D-71254 Ditzingen (DE); Simon, Rudolf, Dr.-Ing., D-70825 Korntal-Münchingen (DE); Eser, Ulrich, Dr.-Ing., D-71732 Tamm (DE)
(74) Vertreter: Jackisch-Kohl, Anna-Katharina

(56) Entgegenhaltungen:
- DE-A- 3 832 915
- US-A- 4 549 472
- US-A- 4 860 420

## Beschreibung

Die Erfindung betrifft eine Reinraumanlage nach dem Oberbegriff des Anspruches 1.

Bei dieser bekannten Reinraumanlage wird die über dem Boden des Reinraumes austretende Reinluft durch ein Vorfilter, eine daran anschließende Klappeneinrichtung, einen Wärmeüberträger und einen Kulissenschalldämpfer geführt, bevor sie zum vorzugsweise als Axialventilator ausgebildeten Gebläse gelangt. Druckseitig ist ein weiterer Kulissenschalldämpfer angeordnet. Aufgrund dieser Anordnung tritt beim Betrieb ein hoher Druckverlust auf. Der Axialventilator ist daher als Mittel- oder Hochdruckgebläse mit hohen Durchtrittsgeschwindigkeiten ausgebildet. Deshalb ist dem Ventilator zusätzlich ein verhältnismäßig langer Diffusor nachgeordnet, um wenigstens einen Teil des hohen dynamischen Druckanteils in nutzbaren statischen Druck zurückzugewinnen. Der Druckverlust beim Vorfilter liegt in der Größenordnung von etwa 150 bis 180 Pa. Druckverluste ähnlicher Größenordnung werden durch die beiden Kulissenschalldämpfer verursacht. Zusammen mit dem Druckverlust der Schwebstoffilter erreicht der vom Ventilator zu überwindende statische Druckverlust der Anlage typischerweise Werte von ca. 500 bis 700 Pa. Für diese Druckbereiche werden insbesondere Axialventilatoren eingesetzt, die bauartbedingt einen hohen dynamischen Druckanteil von etwa 300 bis 400 Pa aufweisen, der auch durch einen nachgeschalteten Diffusor nur zu einem Teil in nutzbaren statischen Druck zurückgewonnen werden kann. Diese bekannte Bauweise führt neben hohen Investionskosten für Ventilator, Diffusor und Kulissenschalldämpfer auch zu hohen Betriebskosten. Mit dieser bekannten Reinraumanlage kann darum nicht kostengünstig gearbeitet werden.

Es ist auch eine Reinraumanlage bekannt (DE-A-38 32 915), bei der die Reinluft durch einen Radialventilator angesaugt wird. Ihm sind Schalldämpfer, Drosselklappen sowie Vorfilter nachgeordnet, was beim Betrieb der Reinraumanlage zu einem hohen Druckverlust führt.

Der Erfindung liegt die Aufgabe zugrunde, die gattungsgemäße Reinraumanlage so auszubilden, daß die Druckverluste im Betrieb gering gehalten werden können, so daß mit der Reinraumanlage kostensparend gearbeitet werden kann.

Diese Aufgabe wird bei der gattungsgemäßen Reinraumanlage erfindungsgemäß mit den kennzeichnenden Merkmalen des Anspruches 1 gelöst.

Bei der erfindungsgemäßen Reinraumanlage strömt die aus dem Reinraum austretende Reinluft vorzugsweise ungefiltert dem Gebläse zu. Im Strömungsbereich zwischen dem Reinraum und dem Gebläse ist dann kein Vorfilter notwendig. Ebenso wird auf die druck- und saugseitige Anordnung von Kulissenschalldämpfern verzichtet. Dadurch werden die im Strömungsbereich der Anlage durch Einbauten verursachten Druckverluste erheblich reduziert. Aufgrund dieser sehr geringen Druckverluste, die im wesentlichen nur durch die Schwebstoffilter im Deckenbereich des Reinraumes entstehen, genügen zur Luftumwälzung für Niederdruck ausgelegte Axialventilatoren mit großem Strömungsquerschnitt und damit nur geringem dynamischen Druckanteil von ca. 20 bis 70 Pa, d.h. auch ohne nachgeschalteten Diffusor ist der durch den dynamischen Druckanteil verursachte zusätzliche Energiebedarf sehr klein. Der vom Ventilator zu überwindende statische Differenzdruck sinkt bei einer vertikalen Verdrängungsströmung im Reinraum von etwa 0,45 m/s durch die erfindungsgemäße Anordnung auf ca. 120 bis 250 Pa. Die für Niederdruck ausgelegten Axiallüfter können bis zu einer statischen Druckdifferenz von etwa 300 Pa eingesetzt werden. Ventilatoren dieser Bauart sind äußerst preisgünstig und weisen nur eine vergleichsweise geringe Geräuschentwicklung auf. Der Schallpegel im Reinraum kann daher unter Vermeidung der üblichen aufwendigen Kulissenschalldämpfer mit einfachen erfindungsgemäßen Maßnahmen auf niedrigem Niveau gehalten werden. Die erfindungsgemäße Reinraumanlage zeichnet sich somit durch erheblich günstigere Investitions- und Betriebskosten aus.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsformen näher erläutert. Es zeigen
- Fig. 1: eine erste Ausführungsform einer erfindungsgemäßen Reinraumanlage,
- Fig. 2: in einer Darstellung entsprechend Fig. 1 eine zweite Ausführungsform einer erfindungsgemäßen Reinraumanlage,
- Fig. 3: in einer Darstellung entsprechend Fig. 1 eine dritte Ausführungsform einer erfindungsgemäßen Reinraumanlage,
- Fig. 4: in einer Darstellung entsprechend Fig. 1 eine vierte Ausführungsform einer erfindungsgemäßen Reinraumanlage.

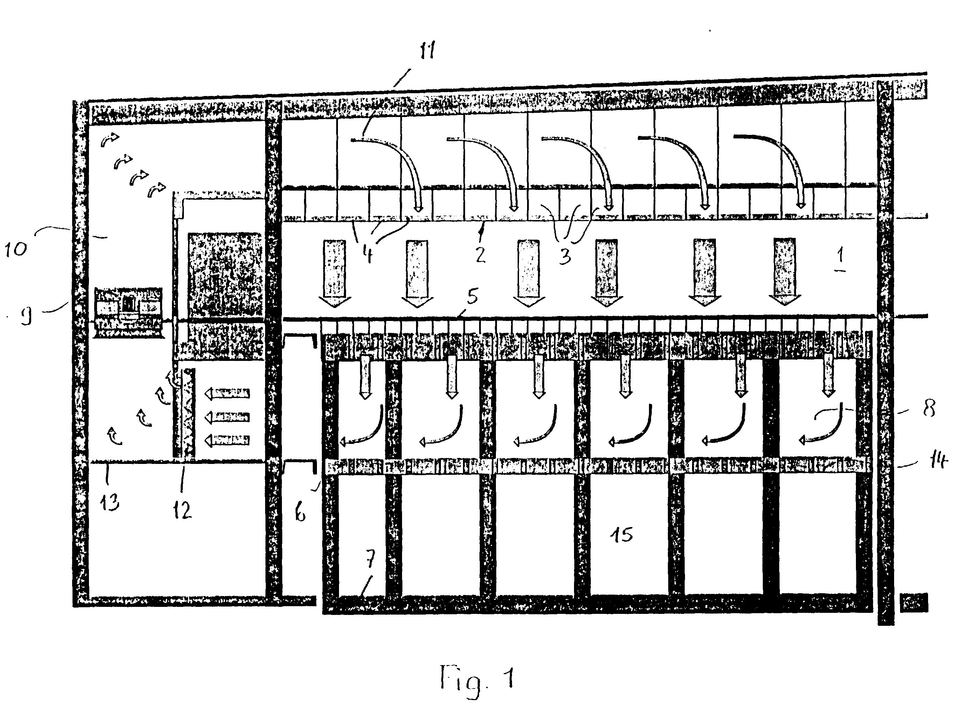

Fig. 1 zeigt im Querschnitt eine Reinraumanlage, die wenigstens einen Reinraum 1 aufweist. Er wird von einem Reinluftstrom vertikal durchströmt. Die Decke 2 des Reinraumes 1 wird durch aneinanderliegende Filtereinheiten 3 gebildet, die in aneinanderliegenden Reihen hinter- und nebeneinander angeordnet und in bekannter Weise ausgebildet sind und durch die die Reinluft nach unten in den Reinraum 1 strömt. Die Filtereinheiten 3 sind in bekannter Weise rasterförmig im Deckenbereich des Reinraumes 1 angeordnet und gehalten.

Der Reinraum 1 hat einen Doppelboden 5, durch den die Reinluft nach unten aus dem Reinraum 1 strömt. Der Doppelboden 5 ist über Stützen 6 auf einem Fundament 7 abgestützt.

Der Reinraum 1 wird gleichmäßig von Reinluft durchströmt, die unten über den Doppelboden 5 in einen Rückführraum 8 gelangt, aus dem die Reinluft durch wenigstens einen Axiallüfter 9 angesaugt wird. Er ist in einem gegenüber dem Reinraum 1 abgedichteten Nebenraum 10 untergebracht. Die angesaugte Reinluft wird, wie die Strömungspfeile in Fig. 1 zeigen, in einen Zuströmraum 11 gefördert, der sich im Bereich oberhalb der Filtereinheiten 3 befindet. Von dort gelangt die Reinluft wieder zu den einzelnen Filtereinheiten 3. Auf die beschriebene Weise wird die Reinluft innerhalb der Reinraumanlage im Kreislauf geführt. Im Nebenraum 10 ist dem Axiallüfter 9 lediglich eine Strömungsklappeneinrichtung 12 vorgeschaltet, die sich über die gesamte Höhe und Länge des Strömungsweges der Reinluft innerhalb des Nebenraumes 10 erstreckt. Die Strömungsklappeneinrichtung 12 ist erforderlich, um bei mehreren in Längsrichtung des Gebäudes angeordneten Ventilatoren einzelne Ventilatorbereiche so abschalten zu können, daß keine Luft entgegengesetzt der ursprünglichen Strömungsrichtung zur Saugseite strömt. Die im Betriebszustand des Ventilators voll geöffnete Strömungsklappeneinrichtung 12 sitzt auf einem Boden 13, der mit Abstand oberhalb des Fundamentes 7 angeordnet ist. Unterhalb des Doppelbodens 5 des Reinraumes 1 befindet sich in Höhe des Bodens 13 des Nebenraumes 10 eine Zwischendecke 14, die luftdicht abgeschlossen ist und die teilweise als Umlenkung für die durch den Doppelboden 5 hindurchtretende Reinluft dient. Unterhalb der Zwischendecke 14 und des Bodens 13 befindet sich ein Kellerraum 15, in dem Geräte, Maschinen und dergleichen untergebracht werden können.

Je nach Breite bzw. Länge des Reinraumes 1 sind mehrere Axiallüfter 9 mit Abstand neben- bzw. hintereinander angeordnet. Dadurch ist gewährleistet, daß die Reinluft über die gesamte Breite bzw. Länge dem Zuströmraum 11 oberhalb der Filtereinheiten 3 zugeführt wird. Der Zuströmraum 11 kann so hoch sein, daß er begehbar ist, um beispielsweise Reparatur- oder Wartungsarbeiten an den Filtereinheiten 3 durchführen zu können.

Zwischen dem Axiallüfter 9 und dem Doppelboden 5 befinden sich keine Vorfilter und/oder Schalldämpfer, so daß in diesem Strömungsbereich nur äußerst geringe Druckverluste auftreten, die im wesentlichen nur durch die Schwebstofffilter 4 der Filtereinheiten 3 entstehen. Diese Druckverluste liegen bei einer angenommenen Strömungsgeschwindigkeit der Reinluft von etwa 0,45 m/s in der Größenordnung von etwa 80 bis 120 Pa. Dadurch zeichnet sich diese Reinraumanlage durch einen entsprechend geringen Energiebedarf und dementsprechend geringe Betriebskosten aus. Die Axiallüfter 9 sind für den Niederdruckbereich vorgesehen, der bis zu einer statischen Druckdifferenz von etwa 300 Pa geht. In diesem Druckbereich zeichnen sich die Axiallüfter 9 dadurch aus, daß sie große Strömungsquerschnitte und damit nur geringe Strömungsgeschwindigkeiten in der Größenordnung von etwa 6 bis 11 m/s haben, preisgünstig in der Anschaffung sind und wegen der geringen Strömungsgeschwindigkeiten nur geringe dynamische Drukkanteile aufweisen und sehr wenig Geräusch entwickeln. Darum sind keine oder nur geringe zusätzliche Schalldämpfungsmaßnahmen erforderlich. Die Reinraumanlage gemäß Fig. 1 zeichnet sich wegen der nur sehr geringen Druckverluste durch eine konstruktiv einfache und dementsprechend auch sehr preisgünstige Ausbildung aus.

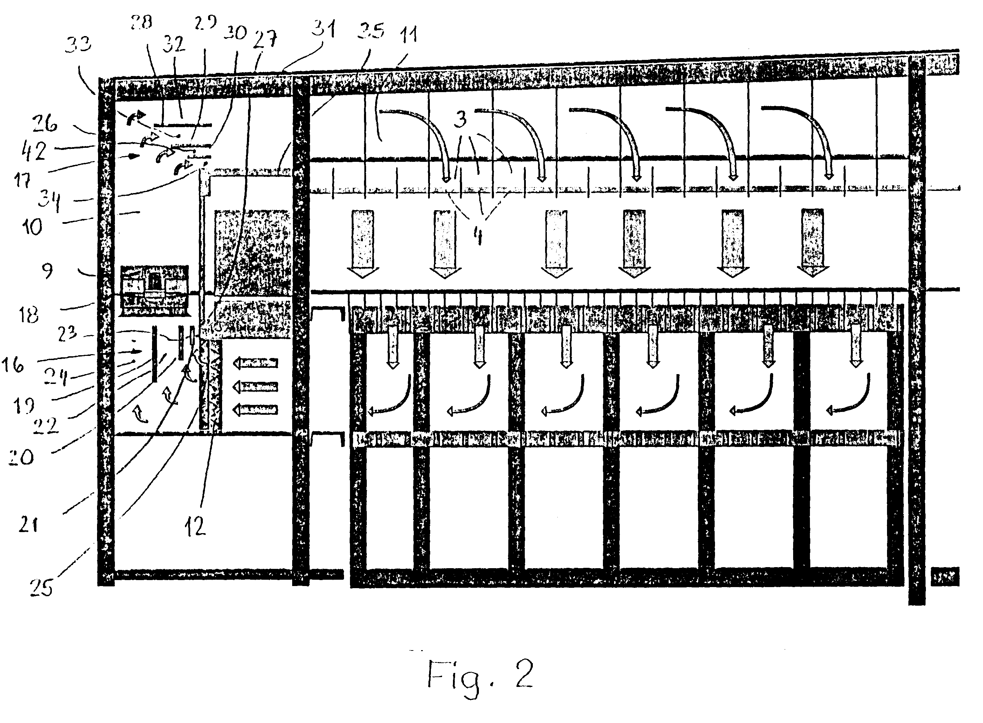

Fig. 2 zeigt eine Reinraumanlage, die sich vom Ausführungsbeispiel nach Fig. 1 nur durch die Anordnung von Schalldämpfern 16 und 17 vor und hinter den Axiallüftern 9 unterscheidet. Beide Schalldämpfer 16, 17 sind im Nebenraum 10 untergebracht. Wie beim vorigen Ausführungsbeispiel sind die Axiallüfter 9 in einer Zwischendecke 18 angeordnet, die den Nebenraum 10 unterteilt. In der Zwischendecke 18 lassen sich die Axiallüfter 9 einfach montieren.

Der Schalldämpfer 16 im Saugbereich der Axiallüfter 9 wird durch mit Abstand nebeneinander angeordnete Platten 19 bis 21 gebildet, die sich vorteilhaft über die ganze Länge des Nebenraumes 10 erstrecken. Diese Platten 19 bis 21 bestehen aus jedem geeigneten schalldämmenden Material, vorzugsweise aus ausgasungsfreiem Material bzw. sind mit schalldämmendem Material belegt. Als Schalldämpfer 16 können zum Beispiel auch Membranabsorber eingesetzt werden. Die Platten 19 bis 21 sind in Strömungsrichtung der Reinluft unterschiedlich lang. Die am nächsten bei der Strömungsklappeneinrichtung 12 liegende Platte 21 hat die kleinste Länge der drei Platten. Die benachbarte Schalldämpferplatte 20 ist länger als die Platte 21, jedoch kürzer als die Platte 19. Der Abstand zwischen den Schalldämpferplatten 21 und 20 ist geringer als der Abstand zwischen den Schalldämpferplatten 20 und 19. Die Längenabstufung, die Dicke der Platten sowie die unterschiedlichen Abstände zwischen den Schalldämpferplatten 19 bis 21 sind so gewählt, daß über den Ansaugbereich der Axiallüfter 9 eine gleichmäßige Ansaugung der Reinluft sowie eine gleichmäßige Schalldämpfung erreicht wird. Die Schalldämpferplatten 19 bis 21 liegen parallel zueinander und erstrecken sich jeweils in vertikaler Richtung. Die dem Axiallüfter 9 zugewandten Enden der Platten 19 bis 21 liegen auf gleicher Höhe. Diese Platten dienen nicht nur zur Schalldämmung, sondern gleichzeitig auch zur Strömungsleitung der Reinluft. Dadurch ist sichergestellt, daß die Reinluft optimal von den Axiallüftern 9 angesaugt werden kann. Zwischen den Schalldämpferplatten 19, 20 und 20, 21 wird jeweils ein Strömungskanal 22 und 23 gebildet. Außerdem werden Strömungskanäle 24 und 25 zwischen der Platte 19 und der benachbarten Seitenwand 26 des Nebenraumes 10 sowie zwischen der Platte 21 und einer benachbarten Wand 27 im Nebenraum 10 gebildet. Die über die Strömungsklappeneinrichtung 12 zumindest annähernd horizontal zuströmende Reinluft wird nach dem Durchtritt rechtwinklig umgelenkt und strömt durch die Strömungskanäle 22 bis 25 in gleichmäßiger Verteilung den Axiallüftern 9 zu.

Der Schalldämpfer 17 im Strömungsbereich hinter den Axiallüftern 9 dient nicht nur zur Schalldämpfung, sondern auch als Strömungsleiteinrichtung für die Reinluft. Der Schalldämpfer 17 wird durch drei zueinander parallele Schalldämmplatten 28 bis 30 gebildet, die in Strömungsrichtung der Reinluft unterschiedlich lang sind. Der Abstand zwischen den Platten 28 und 29 ist größer als der Abstand zwischen den Platten 29 und 30. Zwischen der Platte 28 und der benachbarten Decke 31 des Zuströmraumes 11 wird ein Strömungskanal 32 gebildet. Ein weiterer Strömungskanal 33 wird durch die Platten 28 und 29 gebildet. Die Platten 29 und 30 begrenzen einen dritten Strömungskanal 42. Ein vierter Strömungskanal 34 wird zwischen der Platte 30 und einer benachbarten Wand 35 im Nebenraum 10 gebildet. Die parallel zur Wand 35 liegende Platte 30 hat die kleinste Länge, während die benachbart zur Decke 31 liegende Platte 28 die größte Länge hat. Die Länge der Platten 28 bis 30, ihre Dicke und ihr Abstand voneinander sowie von der Decke 31 und der Wand 35 ist wiederum so gewählt, daß die Reinluft in gleichmäßiger Strömungsverteilung in den Zuströmraum 11 strömt sowie eine gleichmäßige Schalldämpfung erreicht wird. Die dem Zuströmraum 11 zugewandten Enden der Platten 28 bis 30 liegen auf gleicher Höhe. Die Schalldämpfungsplatten 28 bis 30 können wiederum aus jedem geeigneten schalldämmenden Material, vorzugsweise aus ausgasungsfreiem Material, bestehen bzw. mit einem entsprechenden Material belegt sein. Wie Fig. 2 zeigt, liegen die Platten 28 bis 30 horizontal und somit rechtwinklig zu den Platten 19 bis 21 des Schalldämpfers 16. An den Schalldämpferplatten 28 bis 30 wird die Reinluft rechtwinklig umgelenkt.

Wie beim Ausführungsbeispiel nach Fig. 1 liegt die Decke 31 der Reinraumanlage annähernd rechtwinklig zur Ausströmrichtung der Axiallüfter 9. Dies hat den Vorteil, daß an der Decke 31 ein Teil des Schalls zurück zu den Axiallüftern 9 und nicht in Richtung auf den Reinraum 1 reflektiert wird. Dadurch wird eine zusätzliche Schallreduzierung erreicht.

Die Platten 28 bis 30 des Schalldämpfers 17 können sich in horizontaler Richtung noch weiter in Richtung auf den Strömungsraum 11 erstrecken, so daß eine größere Schalldämpfung erreicht wird. Die Platten 28 bis 30 erstrecken sich wiederum über die gesamte Breite des Nebenraumes 10. Sie haben Abstand von der vertikalen Seitenwand 26 der Reinraumanlage.

Auch die Ausführungsform nach Fig. 2 zeichnet sich durch eine einfache konstruktive Ausbildung aus. Sie arbeitet sehr geräuscharm und hat nur sehr geringe Druckverluste, die - wie beim Ausführungsbeispiel nach Fig. 1 - im wesentlichen nur durch die Schwebstoffilter 4 der FilterVentilator-Einheiten 3 erzeugt werden. Wegen der geringen Druckverluste reichen, wie beim vorigen Ausführungsbeispiel, die Axiallüfter 9 zur Förderung der Reinluft aus. Die Axiallüfter 9 laufen sehr ruhig, so daß keine oder nur geringe zusätzliche Schalldämpfungsmaßnahmen erforderlich sind. Darüberhinaus haben die Axiallüfter 9 nur eine geringe axiale Länge, so daß sie nur wenig Einbauraum benötigen. Auch das Ausführungsbeispiel nach Fig. 2 verursacht nur verhältnismäßig geringe Betriebskosten und benötigt auch nur wenig Energie. Darum kann mit dieser Reinraumanlage kostengünstig gearbeitet werden.

Bei einer weiteren (nicht dargestellten) Ausführungsform kann auf den Schalldämpfer 16 im Ansaugbereich der Axiallüfter 9 verzichtet werden. In diesem Falle ist nur der Schalldämpfer 17 im Strömungsbereich hinter den Axiallüftern 9 vorgesehen. Eine solche Reinraumanlage ist noch preisgünstiger in der Herstellung als das Ausführungsbeispiel nach Fig. 2.

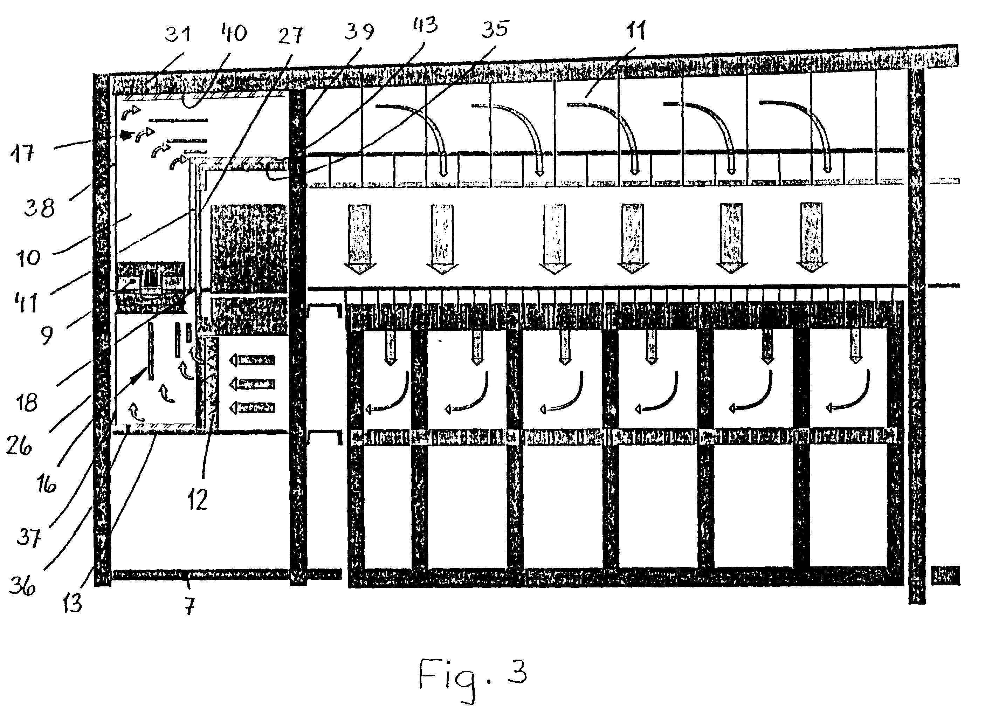

Die Reinraumanlage nach Fig. 3 ist im wesentlichen gleich ausgebildet wie das Ausführungsbeispiel gemäß Fig. 2. Der Unterschied besteht lediglich darin, daß die Seitenwände des Nebenraumes 10 der Reinraumanlage mit Schalldämmaterial belegt sind, wodurch eine extrem hohe Schalldämmung erreicht wird. Der Boden 13 des Nebenraumes 10 ist im Bereich zwischen der Strömungsklappeneinrichtung 12 und der vertikalen Seitenwand 26 mit schalldämmendem Material 36 belegt. Die Seitenwand 26 ist im Bereich zwischen dem Belag 36 und den Axiallüftern 9 ebenfalls mit einem schalldämmenden Belag 37 versehen. Im Bereich zwischen der Zwischendecke 18 des Nebenraumes 10 und der Decke 31 der Reinraumanlage ist die Seitenwand 26 mit einem weiteren schalldämmenden Belag 38 versehen. Die Decke 31 weist im Bereich zwischen dem Belag 38 und einer den Reinraum 1 gegenüber dem Nebenraum 10 trennenden vertikalen Wand 39 ebenfalls einen schalldämmenden Belag 40 auf. Die Wand 39 bildet die der Seitenwand 26 gegenüberliegende Begrenzungswand des Nebenraumes 10, die sich von der Decke 31 bis zum Fundament 7 der Reinraumanlage erstreckt. Für den Durchtritt der Reinluft in den Zuströmraum 11 und vom Rückführraum 8 ist die Wand 39 mit entsprechenden Durchbrechungen versehen.

Schließlich ist die mit Abstand zur Seitenwand 26 liegende und parallel zu ihr verlaufende Wand 27 im Nebenraum 10 mit einem schalldämmenden Belag 41 versehen. Dieser Belag erstreckt sich von der Zwischendecke 18 über die ganze Höhe und Breite der Wand 27. An die Wand 27 schließt, wie bei den vorigen Ausführungsbeispielen, mit Abstand von der Decke 31 rechtwinklig die Wand 35 an, die ebenfalls mit einem schalldämmenden Belag 43 versehen ist.

Infolge der schalldämmenden Beläge 36 bis 38, 40, 41, 43 wird eine extrem hohe Schalldämmung erreicht, die in Verbindung mit den Schalldämpfern 16 und 17 zu einem äußerst geräuscharmen Betrieb der Reinraumanlage führt. Da die Ausführungsform gemäß Fig. 3 im übrigen gleich ausgebildet ist wie das Ausführungsbeispiel nach Fig. 2, wird im übrigen auf die Beschreibung dieses Ausführungsbeispieles verwiesen.

Bei den beschriebenen und dargestellten Ausführungsformen sind die Axiallüfter 9 an einem Ende der Reinraumanlage vorgesehen. Bei entsprechend großen Reinräumen 1 ist es auch möglich, an der gegenüberliegenden Seitenwand der Reinraumanlage einen entsprechenden Nebenraum mit Axiallüftern und ggf. Schalldämpfern anzuordnen. Die Reinraumanlage kann mehr als einen Reinraum 1 aufweisen. Die Schalldämpfer 16 und 17 können auch nur zwei oder mehr als drei Platten aufweisen, je nach den vorhandenen Einbaubedingungen.

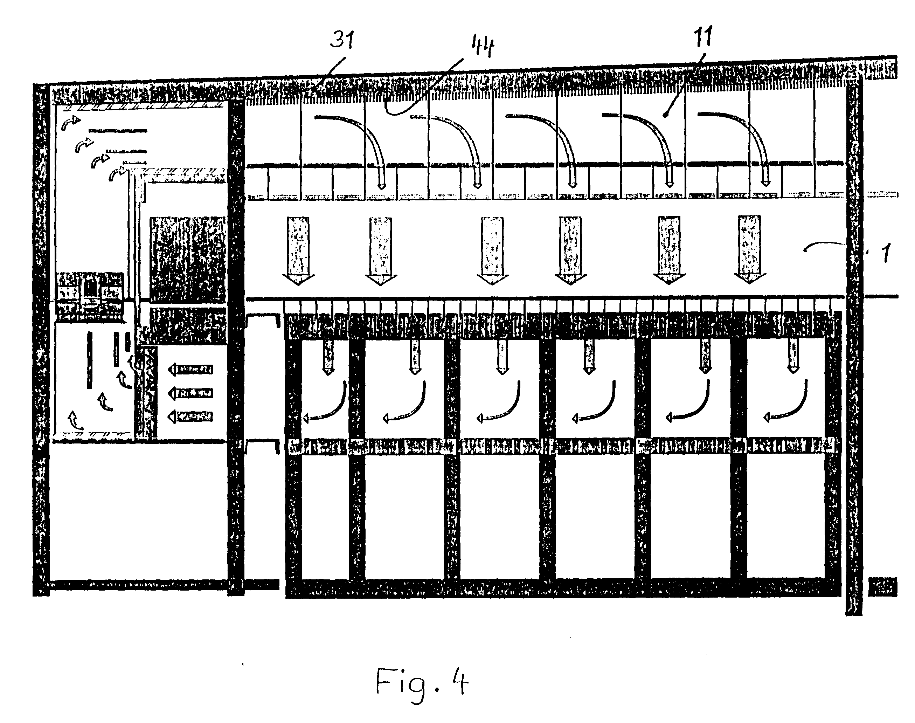

Fig. 4 zeigt eine Ausführungsform einer Reinraumanlage, bei der die Decke 31 im Bereich des Zuströmraumes 11 mit einem schalldämmendem Belag 44 versehen ist. Dieser Belag 44 kann wiederum aus jedem geeigneten schalldämmenden Material bestehen. Auch kann die Decke 31 mit einem oder mehreren Membranabsorbern versehen sein, die ebenfalls als Schalldämpfungsteile eingesetzt werden können. Die Decke 31 ist im Bereich des Zuströmraumes 11 vorteilhaft über die ganze Fläche mit dem Belag 44 versehen. Durch ihn ist eine optimale Schalldämpfung sichergestellt, so daß in dem darunter befindlichen Reinraum 1 nur eine sehr geringe Geräuschentwicklung auftritt. Die Schalldämpfungsteile können auch mit Abstand von der Decke 31 im Zuströmraum 11 abgehängt angeordnet sein. Auch dadurch wird eine hervorragende Schalldämpfung erreicht. Für den Durchtritt der Reinluft können zwischen einzelnen oder allen Schalldämpfungsteilen Abstände vorgesehen sein. Im übrigen ist das Ausführungsbeispiel gleich ausgebildet wie die Ausführungsform gemäß Fig. 3.

Die Reinraumanlage kann aber auch eine Ausbildung entsprechend den Fig. 1 und 2 haben.

Abweichend von den dargestellten Ausführungsformen kann die Reinraumanlage auch jede andere geeignete Ausbildung haben. Wesentlich ist nur, daß die Decke 31 des Zuströmraumes 11, des sogenannten Plenums, mit schalldämmenden Teilen belegt bzw. mit Membranabsorbern versehen ist, so daß im Bereich des Plenums eine sehr hohe Schalldämmung erreicht wird.

## Patentansprüche

1. Reinraumanlage mit mindestens einem Reinraum (1), der von Reinluft durchströmt ist, die durch einen Boden (5) des Reinraumes (1) strömt und von wenigstens einem Gebläse (9) angesaugt wird, das die Reinluft über wenigstens einen Zuströmkanal (11) zuführt, über den die Reinluft unter Durchtritt durch Filter (3) im Bereich einer Decke (2) in den Reinraum (1) eintritt,
dadurch gekennzeichnet, daß das Gebläse (9) ein für Niederdruck ausgelegter Axiallüfter ist, dem die aus dem Reinraum (1) austretende Reinluft zuströmt.

2. Reinraumanlage nach Anspruch 1,
dadurch gekennzeichnet, daß dem vorzugsweise in einem Nebenraum (10) der Reinraumanlage untergebrachten Axiallüfter (9) wenigstens eine Klappeneinrichtung (12) vorgeschaltet ist.

3. Reinraumanlage nach Anspruch 1 oder 2,
dadurch gekennzeichnet, daß auf der Druckseite des Axiallüfters (9) mit Abstand etwa rechtwinklig zur Strömungsrichtung der Reinluft ein Schallreflektor (31), vorzugsweise eine Decke, gegenüberliegt.

4. Reinraumanlage nach einem der Ansprüche 1 bis 3,
dadurch gekennzeichnet, daß der Zuströmkanal (11) winklig, vorzugsweise rechtwinklig, zur Achse des Axiallüfters (9) liegt.

5. Reinraumanlage nach einem der Ansprüche 1 bis 4,
dadurch gekennzeichnet, daß dem Axiallüfter (9) mindestens ein Schalldämpfer (16) vorgeschaltet ist, der vorzugsweise aus wenigstens zwei mit Abstand voneinander und parallel zueinander verlaufenden Platten (19 bis 21) gebildet ist, die vorzugsweise in Achsrichtung des Axiallüfters (9) liegen.

6. Reinraumanlage nach Anspruch 5,
dadurch gekennzeichnet, daß die Platten (19 bis 21) in Strömungsrichtung der Reinluft unterschiedlich lang und/oder unterschiedlich dick sind.

7. Reinraumanlage nach Anspruch 5 oder 6,
dadurch gekennzeichnet, daß die Platten (19 bis 21) aus schalldämmendem Material bestehen.

8. Reinraumanlage nach Anspruch 5 oder 6,
dadurch gekennzeichnet, daß die Platten (19 bis 21) durch jeweils mindestens einen Membranabsorber gebildet sind.

9. Reinraumanlage nach einem der Ansprüche 5 bis 8,
dadurch gekennzeichnet, daß die dem Axiallüfter (9) zugewandten Enden der Platten (19 bis 21) auf gleicher Höhe liegen.

10. Reinraumanlage nach einem der Ansprüche 1 bis 9,
dadurch gekennzeichnet, daß auf der Druckseite des Axiallüfters (9) mindestens ein Schalldämpfer (17) angeordnet ist, der vorzugsweise aus wenigstens zwei mit Abstand voneinander und parallel zueinander verlaufenden Platten (28 bis 30) gebildet ist.

11. Reinraumanlage nach Anspruch 10,
dadurch gekennzeichnet, daß die Platten (28 bis 30) in Strömungsrichtung der Reinluft unterschiedlich lang und/oder unterschiedlich dick sind.

12. Reinraumanlage nach Anspruch 10 oder 11,
dadurch gekennzeichnet, daß die Platten (28 bis 30) winklig, vorzugsweise senkrecht zur Achsrichtung des Axiallüfters (9) liegen.

13. Reinraumanlage nach einem der Ansprüche 10 bis 12,
dadurch gekennzeichnet, daß die Platten (28 bis 30) aus schalldämmendem Material bestehen.

14. Reinraumanlage nach einem der Ansprüche 10 bis 12,
dadurch gekennzeichnet, daß die Platten (28 bis 30) durch jeweils mindestens einen Membranabsorber gebildet sind.

15. Reinraumanlage nach einem der Ansprüche 10 bis 14,
dadurch gekennzeichnet, daß die dem Zuströmkanal (11) zugewandten Enden der Platten (28 bis 30) auf gleicher Höhe liegen.

16. Reinraumanlage nach einem der Ansprüche 5 bis 15,
dadurch gekennzeichnet, daß die Platten (19 bis 21, 28 bis 30) unterschiedlichen Abstand voneinander haben.

17. Reinraumanlage nach einem der Ansprüche 5 bis 16,
dadurch gekennzeichnet, daß die kürzeste Platte (21, 30) den kleinsten Abstand und/oder die größte Dicke aufweist.

18. Reinraumanlage nach einem der Ansprüche 5 bis 17,
dadurch gekennzeichnet, daß die Größe der Platten (19 bis 21, 28 bis 30) und der Abstand voneinander so abgestimmt sind, daß in jedem Strömungsraum gleiche Schalldämpfung erreicht wird.

19. Reinraumanlage nach einem der Ansprüche 2 bis 18,
dadurch gekennzeichnet, daß die Wandung (13, 26, 27, 31) des Nebenraumes (10) im Bereich des Axiallüfters (9) zumindest teilweise mit einer Schalldämmeinrichtung, vorzugsweise mit einem schalldämmenden Belag (36 bis 38, 40, 41, 43), versehen ist.

20. Reinraumanlage nach Anspruch 19,
dadurch gekennzeichnet, daß die Schalldämmeinrichtung durch mindestens einen Membranabsorber gebildet ist.

21. Reinraumanlage nach einem der Ansprüche 1 bis 20,
dadurch gekennzeichnet, daß im Zuströmkanal (11) mindestens eine Schalldämmeinrichtung (44) vorgesehen ist.

22. Reinraumanlage nach Anspruch 21,
dadurch gekennzeichnet, daß die Schalldämmeinrichtung (44) an der Decke (31) des Zuströmkanales (11) angeordnet ist.

23. Reinraumanlage nach Anspruch 21,
dadurch gekennzeichnet, daß die Schalldämmeinrichtung (44) mit Abstand zur Decke (31) vorgesehen ist.

24. Reinraumanlage nach einem der Ansprüche 21 bis 23,
dadurch gekennzeichnet, daß die Schalldämmeinrichtung (44) ein Belag aus schalldämmendem Material ist.

25. Reinraumanlage nach einem der Ansprüche 21 bis 23,
dadurch gekennzeichnet, daß die Schalldämmeinrichtung durch wenigstens einen Membranabsorber gebildet ist.

## Claims

1. A clean-room installation comprising at least one clean room (1), through which clean air flows, the clean air flowing through a floor (5) of the clean room (1) and being drawn off by at least one fan (9) supplying the clean air by means of at least one flow channel (11), via which the clean air enters the clean room (1), passing through filters (3) in the region of a ceiling (2), characterised in that the fan (9) is an axial fan designed for low pressure, towards which the clean air flows on leaving the clean room (1).

2. A clean-room installation according to claim 1, characterised in that at least one flap device (12) is arranged upstream of the axial fan (9) preferably housed in an adjoining room (10) of the clean-room installation.

3. A clean-room installation according to claim 1 or 2, characterised in that a sound reflector (31), preferably a ceiling, faces the pressure side of the axial fan (9) at a distance therefrom substantially at right angles to the flow direction of the clean air.

4. A clean-room installation according to any one of claims 1 to 3, characterised in that the flow channel (11) is arranged at an angle, preferably a right angle to the axis of the axial fan (9).

5. A clean-room installation according to any one of claims 1 to 4, characterised in that at least one sound absorber (16) is arranged upstream of the axial fan (9) and preferably comprises at least two spaced plates (19 to 21) extending parallel to one another and preferably arranged in the axial direction of the axial fan (9).

6. A clean-room installation according to claim 5, characterised in that the plates (19 to 21) are of different lengths and/or different thicknesses in the flow direction of the clean air.

7. A clean-room installation according to claim 5 or 6, characterised in that the plates (19 to 21) comprise sound-absorbing material.

8. A clean-room installation according to claim 5 or 6, characterised in that the plates (19 to 21) are each formed by at least one membrane absorber.

9. A clean-room installation according to any one of claims 5 to 8, characterised in that the ends of the plates (19 to 21), facing the axial fan (9), are arranged at the same height.

10. A clean-room installation according to any one of claims 1 to 9, characterised in that at least one sound absorber (17) is arranged on the pressure side of the axial fan (9) and preferably comprises at least two spaced plates (28 to 30) extending parallel to one another.

11. A clean-room installation according to claim 10, characterised in that the plates (28 to 30) are of different lengths and/or different thicknesses in the flow direction of the clean air.

12. A clean-room installation according to claim 10 or 11, characterised in that the plates (28 to 30) are arranged at an angle, preferably perpendicularly to the axial direction of the axial fan (9).

13. A clean-room installation according to any one of claims 10 to 12, characterised in that the plates (28 to 30) comprise sound-absorbing material.

14. A clean-room installation according to any one of claims 10 to 12, characterised in that the plates (28 to 30) are each formed by at least one membrane absorber.

15. A clean-room installation according to any one of claims 10 to 14, characterised in that the ends of the plates (28 to 30), facing the flow channel (11), are arranged at the same height.

16. A clean-room installation according to any one of claims 5 to 15, characterised in that the plates (19 to 21, 28 to 30) are at different distances apart.

17. A clean-room installation according to any one of claims 5 to 16, characterised in that the shortest plate (21, 30) is at the shortest distance and/or has the greatest thickness.

18. A clean-room installation according to any one of claims 5 to 17, characterised in that the size of the plates (19 to 21, 28 to 30) and their mutual spacing are co-ordinated so that the same level of sound absorption is achieved in each flow space.

19. A clean-room installation according to any one of claims 2 to 18, characterised in that the walls (13, 26, 27, 31) of the adjoining room (10) in the region of the axial fan (9) are at least partly provided with a sound-absorbing device, preferably a sound-absorbing covering (36 to 38, 40, 41, 43).

20. A clean-room installation according to claim 19, characterised in that the sound-absorbing device is formed by at least one membrane absorber.

21. A clean-room installation according to any one of claims 1 to 20, characterised in that at least one sound-absorbing device (44) is provided in the flow channel (11).

22. A clean-room installation according to claim 21, characterised in that the sound-absorbing device (44) is arranged on the ceiling (31) of the flow channel (11).

23. A clean-room installation according to claim 21, characterised in that the sound-absorbing device (44) is arranged at a distance from the ceiling (31).

24. A clean-room installation according to any one of claims 21 to 23, characterised in that the sound-absorbing device (44) is a covering of sound-absorbing material.

25. A clean-room installation according to any one of claims 21 to 23, characterised in that the sound-absorbing device is formed by at least one membrane absorber.

## Revendications

1. Installation de salle blanche comportant au moins une salle blanche (1) qui est parcourue par de l'air épuré qui s'écoule à travers un plancher (5) de la salle blanche (1) et est aspiré par au moins un ventilateur (9) qui fait passer l'air épuré par au moins un canal de départ (11) par lequel l'air épuré pénètre dans la salle blanche (1) en traversant des filtres (3) situés dans la zone d'un plafond (2),
caractérisée par le fait que le ventilateur (9) est un ventilateur axial qui est conçu pour une basse pression et auquel arrive l'air épuré sortant de la salle blanche (11).

2. Installation de salle blanche selon la revendication 1,
caractérisée par le fait qu'en amont du ventilateur axial (9), logé de préférence dans un espace auxiliaire (10) de l'installation de salle blanche, est installé au moins un dispositif de volets (12).

3. Installation de salle blanche selon la revendication 1 ou 2,
caractérisée par le fait que, du côté pression du ventilateur axial (9) et en face et à une certaine distance du ventilateur, à peu près perpendiculairement à la direction de l'écoulement de l'air épuré, se trouve un réflecteur acoustique (31), de préférence un plafond.

4. Installation de salle blanche selon la revendication 1 ou 3,
caractérisée par le fait que le canal de départ (11) est situé angulairement, de préférence perpendiculairement, par rapport à l'axe du ventilateur axial (9).

5. Installation de salle blanche selon l'une des revendications 1 à 4,
caractérisée par le fait qu'en amont du ventilateur axial (9) est installé au moins un amortisseur acoustique (16) qui de préférence est formé d'au moins deux panneaux (19 à 21) qui sont situés à une certaine distance l'un de l'autre et parallèlement l'un à l'autre et de préférence selon la direction axiale du ventilateur axial (9).

6. Installation de salle blanche selon la revendication 5,
caractérisée par le fait que les panneaux (19 à 21) sont de longueur différente et/ou d'épaisseur différente selon la direction de l'écoulement de l'air épuré.

7. Installation de salle blanche selon la revendication 5 ou 6,
caractérisée par le fait que les panneaux (19 à 21) sont constitués d'un matériau amortisseur acoustique.

8. Installation de salle blanche selon la revendication 5 ou 6,
caractérisée par le fait que les panneaux (19 à 21) sont formés par chacun au moins un absorbeur à membrane.

9. Installation de salle blanche selon l'une des revendications 5 à 8,
caractérisée par le fait que les extrémités des panneaux (19 à 21) situées du côté du ventilateur axial (9) se trouvent à la même hauteur.

10. Installation de salle blanche selon l'une des revendications 1 à 9,
caractérisée par le fait que, du côté pression du ventilateur axial (9), est disposé au moins un amortisseur acoustique (17) qui de préférence est formé d'au moins deux panneaux (28 à 30) placés à une certaine distance l'un de l'autre et parallèlement l'un à l'autre.

11. Installation de salle blanche selon la revendication 10,
caractérisée par le fait que les panneaux (28 à 30) sont de longueur différente et/ou d'épaisseur différente selon la direction de l'écoulement de l'air épuré.

12. Installation de salle blanche selon la revendication 10 ou 11,
caractérisée par le fait que les panneaux (28 à 30) sont placés angulairement, de préférence perpendiculairement, à la direction axiale du ventilateur axial (9).

13. Installation de salle blanche selon la revendication 10 à 12,
caractérisée par le fait que les panneaux (28 à 30) sont constitués de matériau amortisseur acoustique.

14. Installation de salle blanche selon l'une des revendications 10 à 12,
caractérisée par le fait que les panneaux (28 à 30) sont chacun formés par au moins un absorbeur à membrane.

15. Installation de salle blanche selon l'une des revendications 10 à 14,
caractérisée par le fait que les extrémités des panneaux (28 à 30) situées du côté du canal de départ (11) se trouvent à la même hauteur.

16. Installation de salle blanche selon l'une des revendications 5 à 15,
caractérisée par le fait que les panneaux (19 à 21, 28 à 30) sont à une distance différente l'un de l'autre.

17. Installation de salle blanche selon l'une des revendications 5 à 16,
caractérisée par le fait que le panneau le plus court (21, 30) se trouve à la plus petite distance et/ou présente la plus grande épaisseur.

18. Installation de salle blanche selon l'une des revendications 5 à 17,
caractérisée par le fait que la dimension des panneaux (19 à 21, 28 à 30) et leur distance l'un de l'autre sont déterminées de façon à obtenir un amortissement acoustique identique dans chaque espace d'écoulement.

19. Installation de salle blanche selon l'une des revendications 2 à 18,
caractérisée par le fait que la paroi (13, 26, 27, 31) de l'espace auxiliaire (10) est munie dans la zone du ventilateur axial (9), au moins partiellement, d'un dispositif amortisseur acoustique, de préférence d'un revêtement amortisseur acoustique (36 à 38, 40, 41, 43).

20. Installation de salle blanche selon la revendications 19,
caractérisée par le fait que le dispositif amortisseur acoustique est formé par au moins un absorbeur à membrane.

21. Installation de salle blanche selon l'une des revendications 1 à 20,
caractérisée par le fait que dans le canal de départ (11) est prévu au moins un dispositif amortisseur acoustique (44).

22. Installation de salle blanche selon la revendication 21,
caractérisée par le fait que le dispositif amortisseur acoustique (44) est disposé au plafond (31) du canal de départ (11).

23. Installation de salle blanche selon la revendication 21,
caractérisée par le fait que le dispositif amortisseur acoustique (44) est prévu à une certaine distance du plafond (31).

24. Installation de salle blanche selon l'une des revendications 21 à 23,
caractérisée par le fait que le dispositif amortisseur acoustique (44) est un revêtement de matériau amortisseur acoustique.

25. Installation de salle blanche selon l'une des revendications 21 à 23,
caractérisée par le fait que le dispositif amortisseur acoustique (44) est formé par au moins un absorbeur à membrane.
